# EUROPÄISCHE PATENTSCHRIFT

(11) **EP 0 684 264 B1**
(45) Veröffentlichungstag und Bekanntmachung des Hinweises auf die Patenterteilung: **05.11.1997**
(21) Anmeldenummer: 95107324.6
(22) Anmeldetag: 15.05.1995
(51) Int. Cl.: C08F 212/10

(54) **Verfahren zur Herstellung von Styrol-Acrylnitril-Copolymerisaten**
Process for preparing styrene-acrylonitrile copolymers
Procédé de préparation de copolymères de styrène-acrylonitrile

(30) Priorität: 25.05.1994 DE 4418149
(43) Veröffentlichungstag der Anmeldung: 29.11.1995
(73) Patentinhaber: BAYER AG, 51368 Leverkusen (DE)
(72) Erfinder: Leiberich, Ricarda, Dr., D-62332 Langen (DE); Dummersdorf, Hans-Ulrich, Dr., D-51399 Burscheid (DE); Waldmann, Helmut, Dr., D-51373 Leverkusen (DE); Gasche, Hans-Erich, Dr., D-51519 Odenthal (DE); Kricsfalussy, Zoltan, Dr., D-51375 Leverkusen (DE)

(56) Entgegenhaltungen:
- EP-A- 0 590 842
- GB-A- 1 172 713

## Beschreibung

Die Erfindung betrifft die Herstellung von Styrol-Acrylnitril-Copolymerisaten in überkritischem Kohlendioxid als Verdünnungsmittel.

Styrol-Acrylnitril-Copolymerisate werden technisch meist durch Lösungs- oder durch Massepolymerisation hergestellt. Die Polymerisation kann radikalisch oder thermisch initiiert werden; die Copolymerisate besitzen im allgemeinen statistischen Aufbau. Meist polymerisiert man "azeotrope" Monomerengemische, d.h. solche, bei denen das Mengenverhältniss von Styrol und Acrylnitril im Polymerisat gleich der Zusammensetzung des Monomerengemischs ist. Die "azeotrope Zusammensetzung ist von der Temperatur abhängig. Bei 60°C enthält das "azeotrope" Styrol/Acrylnitrilgemisch 24 Gew.-% Acrylnitril (J. Am. Chem. Soc. 67, 1710 (1945).

Technisch werden Styrol-Acrylnitril-Copolymerisate (SAN) meist durch eine kontinuierliche Polymerisation hergestellt, bei der die Monomeren selbst als Lösungsmittel dienen und wobei eventuell noch ein weiteres Lösungsmittel (Ethylbenzol) in kleinen Mengen anwesend ist. Bei einem Umsatz von weniger als 70 Gew.-% wird meist die Polymerisation abgebrochen, das Polymerisat von den nicht umgesetzten Monomeren abgetrennt; die Monomeren werden in den Prozeß zurückgeführt. Restliche flüchtige Bestandteile werden aus dem Polymerisat durch Extrudieren in einem Entgasungsextruder entfernt. In jedem Falle ist hier die Aufarbeitung des Polymerisats und die Rückgewinnung und Rückführung der Restmonomeren mit erheblichem Aufwand verbunden. Führt man die Polymerisation zu höher ren Umsätzen ("Massepolymerisation"), dann muß man hoch viskose Reaktionsschmelzen handhaben, was einen erheblichen technischen Aufwand erfordert und aus diesen die Restmonomeren entfernen, was technisch schwierig ist.

Gegenstand der Erfindung ist ein Verfahren zur Herstellung von Styrol-Acrylnitril-Copolymerisaten, das dadurch gekennzeichnet ist, daß man Styrol und Acrylnitril in überkritischem Kohlendioxid als Verdünnungsmittel, gegebenenfalls in Anwesenheit eines radikalischen Initiators, bei einem Druck von 73 bis 400 bar und einer Temperatur von 31 bis 200°C polymerisiert.

Die Eigenschaften von Kohlendioxid in überkritischem Zustand sind in J. Org. Chem. 4, 5097-5101 (1984) beschrieben. Danach liegt der kritische Punkt von Kohlendioxid bei etwa 31°C und 73 bar. Durch die Verwendung des überkritischen Kohlendioxids als Verdünnungsmittel wird die Abfuhr der Reaktionswärme erleichtert, die Viskosität der Reaktionsmischung klein gehalten und die Entfernung der Restmonomeren erleichtert. Das Verdünnungsmittel selbst läßt sich aus dem Polymerisat leicht entfernen, da es ja bei Normalbedingungen gasförmig ist. Es laßt sich leicht beschaffen und ist physiologisch unbedenklich.

Das erfindungsgemäße Polymerisationsverfahren kann bei Drucken von 73 bis 400 bar, bevorzugt bei 100 bis 200 bar, und bei Temperaturen von 31 bis 200°C, bevorzugt 80 bis 200°C, durchgeführt werden. Die Polymerisationsreaktion kann thermisch oder mit Hilfe von in Radikale zerfallende Initiatoren gestartet werden. Es können sämtliche Initiatoren verwendet werden, die für die Polymerisation von Styrol und Acrylnitril bekannt und üblich sind. Geeignet sind beispielsweise (besonders für Temperaturen von 80 bis 100°C) Dibenzoylperoxid, 2,2-Azobis-(isobutyronitril) und tert.-Butylpermaleinat. Für Temperaturen über 145°C können Peroxide, z.B. Di-tert.-butylperoxid, verwendet werden.

Die Initiatoren können in den für die Polymerisation von Styrol und Acrylnitril üblichen Mengen eingesetzt werden. Beispielsweise wendet man 100 Gew.-Teile der Monomeren 0,005 bis 10, vorzugsweise 0,1 bis 5 Gew.-Teile des Initiators an.

Bezogen auf 100 Gew.-Teile Monomermischung verwendet man im allgemeinen 5 bis 1 500, vorzugsweise 20 bis 900 Gew.-Teile Kohlendioxid.

Bevorzugt ist Styrol und Acrylnitril im "azeotropen" Mischungsverhältnis einzusetzen. Es ist aber auch möglich, dieses Verhältnis zu überschreiten oder zu unterschreiten. Die Polymerisation kann kontinuierlich oder diskontinuierlich durchgeführt werden.

Eine Anzahl verschiedener Reaktoren kann benutzt werden. Diese schließen Hochviskosreaktoren ein. Beispiele sind gerührte Kesselkaskaden, Schneckenmaschinen, List-Reaktoren und mehrphasige Spiralrohrreaktoren.

Um die bei der Polymerisation entstehende Wärme abzuführen, ist es wünschenswert, daß die Druckapparaturen über ein Kühlsystem verfügen. Weiterhin muß die Apparatur beheizbar und die Druckapparaturen sollten über Mischeinrichtungen verfügen, wie z.B. Rührer (Blatt-, Anker-, Begasungsrührer).

Die Polymerisationen können beispielsweise so ausgeführt werden, daß man in einer Druckapparatur zunächst Monomer und hierin gelösten Initiator vorlegt, danach Kohlendioxid in flüssiger Form einbringt und nach dem Verschließen des Autoklaven das Reaktionsgemisch auf die gewünschte Polymerisationstemperatur erhitzt. Nach Abschluß der Polymerisation wird das Reaktionsgemisch abgekühlt und das Kohlendioxid durch Entspannen abgetrennt. Dabei können die Polymere als pulverförmiger fester Rückstand anfallen.

Eine besonders vorteilhafte Durchführung des erfindungsgemäßen Verfahrens besteht darin, daß man die Reaktion in einem kontinuierlich durchströmten Rohrreaktor durchführt. Als Rohrreaktor kommen grundsätzlich alle druckfesten Apparate mit einem l/d-Verhältnis größer 10 in Frage. Eine geeignete Dimension ist beispielsweise ein Reaktionsrohr mit der lichten Weite von 100 mm. Die Länge des Reaktionsrohres richtet sich nach der Reaktionszeit, die je nach Temperatur, Druck, CO₂-Gehalt und Initiatorkonzentration in weiten Grenzen variieren kann. Beispielsweise kann bei einem CO₂-Gehalt von 20 bis 30 %, einer Reaktionstemperatur von 120 bis 200°C, einer Initiatormenge von 0,1 Gew.-% und einem Durchsatz von 1 000 bis 2 000 kg/h ein Reaktionsrohr mit 500 m Länge verwendet werden. Die kontinuierliche oder diskontinuierliche Entspannung des Reaktionsgemisches kann mit grundsätzlich allen üblichen technischen Vorrichtungen erfolgen, wie z.B. Ventilen, Düsen oder Entspannungsrohren.

Um den Gehalt an Restmonomeren im Polymer zu verringern, ist es vorteilhaft, die Entspannung so zu führen, daß das Polymer am Ende der Reaktionsstrecke als Schmelze vorliegt. Dadurch wird bei einem gesteuerten Entspannungsschritt Restmonomer aus der Polymerphase in die CO₂-reiche Phase extrahiert. Um die üblichen Anforderungen entsprechenden Restmonomergehalte zu erreichen, kann es vorteilhaft sein, vor der Entspannung zusätzlich überkritisches CO₂ in den Reaktor einzudosieren. Das Polymer wird nach der vollständigen Entspannung als granulierbare, temperierte Schmelze erhalten.

Die Bestimmung der mittleren Molmassen und Molmassenverteilungen erfolgte mittels GPC-Analytik und mittels Viskositätsmessungen. Die chemische Charakterisierung der Produkte erfolgte über GPC/FT-IR.

### Beispiel 1

In einem 400 ml Autoklaven wurden 24,29 g Styrol und 7,77 g Acrylnitril und 0,33 g Azobisisobuttersäuredinitril vorgelegt. Dazu gab man 149 g Kohlendioxid und verschloß den Autoklaven, der mit einem Rührer und einer Beheizung ausgestattet war. Das Reaktionsgemisch wurde gerührt (300 U/min) und auf 80°C erwärmt. Dabei stellte sich ein Druck von 116 bar ein. Nach einer Verweilzeit des Reaktionsgemisches von 5 Stunden bei 80°C und 116 bar wurde der Autoklaveninhalt gekühlt und entspannt. Man erhielt einen weißen Feststoff mit einer Ausbeute von 84 %. Die mittlere Molmasse des Produktes betrug 149·10³ g/mol (η = 70,99 ml/g). Eine Charakterisierung des Produktes erfolgte über FT-IR. Das Produkt weist eine Zusammensetzung von 76 % Styrol und 24 % Acrylnitril auf.

### Beispiel 2

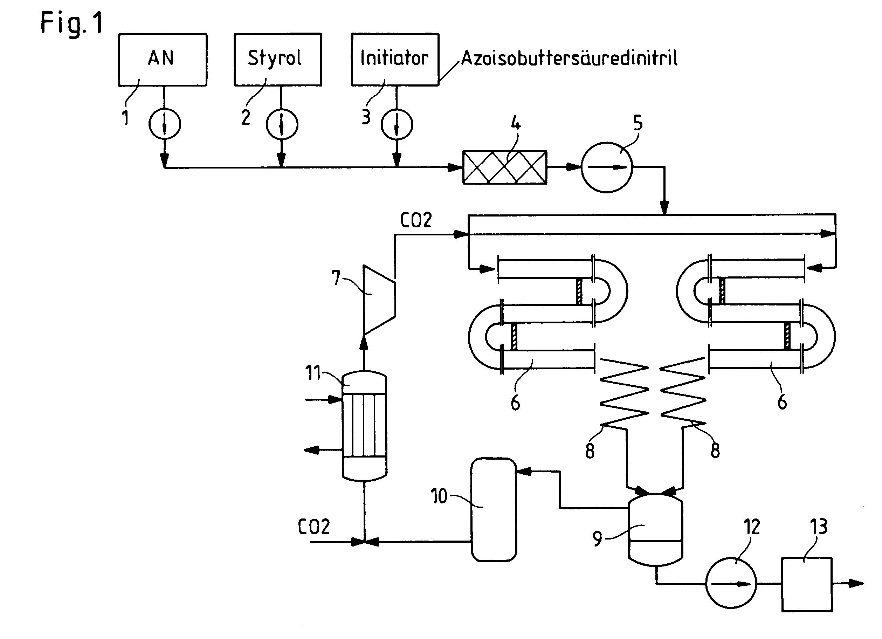

Fig. 1 zeigt eine technische Ausführungsform des erfindungsgemäßen Verfahrens. In den beiden Vorlagen 1 und 2 werden die Monomeren Acrylnitril und Styrol, im Behälter 3 Azobisisobuttersäuredinitril als Initiator vorgelegt. Mittels mengenstromgeregelter Dosierpumpen wird ein mit Initiator versetztes Monomerengemisch von 2 430 kg/h Styrol und 800 kg/h Acrylnitril über einen statischen Mischer 4, wo eine intensive Durchmischung der Komponenten erfolgt, auf eine Hochdruckpumpe 5 geleitet. In der Hochdruckpumpe 5 wird das homogen vermischte Monomeren-/Initiatorgemisch auf einen Druck von 170 bar gebracht und in zwei parallel angeordneten nachfolgende Strömungsreaktoren 6 von etwa 500 m Länge und 100 mm Innendurchmesseer gepumpt. In die beiden Monomergemischströme wird vor dem Eintritt in die beiden Strömungsreaktoren 6 aus einer Verdichterstufe 7 komprimiertes überkritisches CO₂ mit einem Druck von 175 bar eingepreßt, mit dem Monomerengemisch vermischt und diese im überkritischen CO₂ gelöst. Die beiden Strömungsreaktoren 6 sind doppelt ummantelt und heiz- und kühlbar. Die exotherme Reaktion in den Strömungsreaktoren 6 wird durch Erwärmen bzw. Kühlen so gesteuert, daß die Polymerisation bei 120°C abläuft. In den Strömungsreaktoren 6 findet die Copolymerisation während einer Verweilzeit von ca. 2 bis 3 Stunden statt. Nach der Reaktion wird das Reaktionsgemisch über je ein Entspannungswendelrohr 8 in einen beheizten Flashbehälter 9 kontinuierlich entspannt. Das im Flashbehälter 9 bei der Entspannung gasförmig freiwerdende CO₂ wird in einem nachfolgenden Gewebestaubabscheider 10 von eventuell mitgerissenem Feststoff befreit und nach Abkühlung in einem Rekuperator 11 auf ca. 40°C erneut dem Verdichter 7 zugeführt, und so wieder in den Prozeß eingeführt. Das geschmolzene Copolymerisat wird bei 110°C am Sumpf des Flashbehälters 9 über die Pumpe 12 abgezogen und in an sich bekannter Weise über ein Formwerkzeug geführt und in einem Wasserbad 13 granuliert.

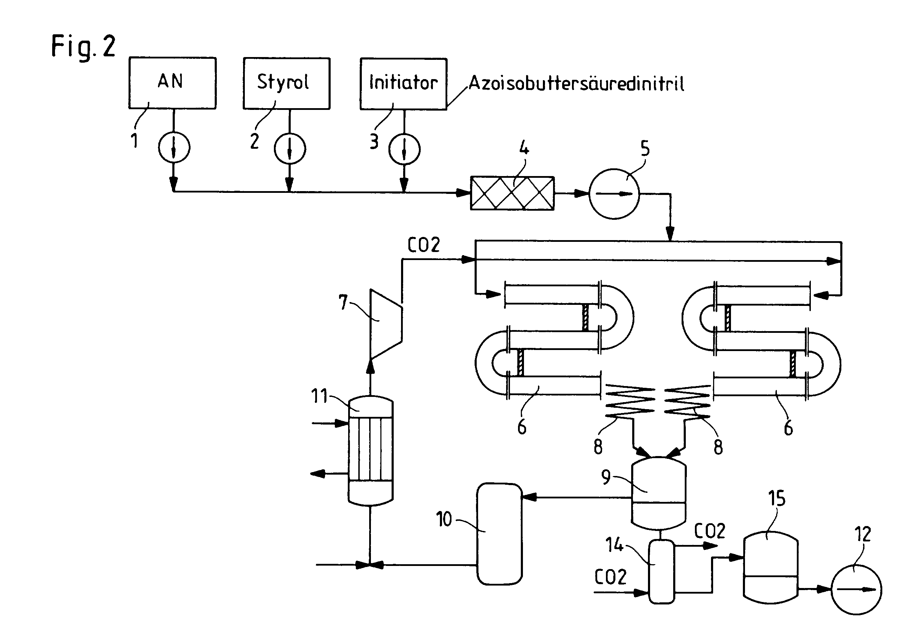

Eine weitere vorteilhafte Lösung nach Fig. 2 besteht darin, daß nach der Entspannung der Polymerschmelze/CO₂-Gemisches in den Flashbehälter 9 auf einen Druck oberhalb von 73 bar eine kontinuierliche Gegenstromextraktionskolonne mit frischem, überkritischem CO₂ betrieben, angeschlossen wird und erst nach der Gegenstromextraktion die Entspannung in einen zweiten Flashbehälter 15 auf Normaldruck erfolgt, aus dem dann die Entnahme der 110°C heißen Polymerschmelze durch die Schmelzpumpe 12 zum Zweck der Weiterverarbeitung erfolgt.

## Patentansprüche

1. Verfahren zur Herstellung von Styrol-Acrylnitril-Copolymerisaten, dadurch gekennzeichnet, daß man Styrol und Acrylnitril in überkritischem Kohlendioxid, gegebenenfalls in Anwesenheit eines radikalischen Initiators, bei einem Druck von 73 bis 400 bar und einer Temperatur von 31 bis 200°C polymerisiert.

2. Verfahren nach Anspruch 1, dadurch gekennzeichnet, daß man pro 100 Gew.-Teile 5 bis 1 500 Gew.-Teile Kohlendioxid verwendet.

3. Verfahren nach Anspruch 1, dadurch gekennzeichnet, daß man Styrol und Acrylnitril im Gewichtsverhältnis 20-35:80-65 in einem Reaktionsrohr mit einem l/d-Verhältnis >10 bei einem Druck von 100 bis 300 bar, einer Temperatur von 70 bis 200°C und einer Verweilzeit von 1 bis 10 Stunden polymerisiert.

4. Verfahren nach Anspruch 1, worin die Polymerisation kontinuierlich oder diskontinuierlich ausgeführt wird.

5. Verfahren nach Anspruch 1, worin Styrol und Acrylnitril in einem Hochviskosreaktor polymerisiert werden.

## Claims

1. A process for producing styrene-acrylonitrile copolymers, characterised in that styrene and acrylonitrile are polymerised in supercritical carbon dioxide, optionally in the presence of a radical initiator, at a pressure of 73 to 400 bar and at a temperature of 31 to 200°C.

2. A process according to claim 1, characterised in that 5 to 1500 parts by weight of carbon dioxide are used per 100 parts by weight.

3. A process according to claim 1, characterised in that styrene and acrylonitrile are polymerised at a weight ratio of 20-35:80-65 in a reaction tube having an I/d ratio > 10 at a pressure of 100 to 300 bar, at a temperature of 70 to 200°C, and with a residence time of 1 to 10 hours.

4. A process according to claim 1, wherein polymerisation is effected continuously or batch-wise.

5. A process according to claim 1, wherein styrene and acrylonitrile are polymerised in a high-viscosity reactor.

## Revendications

1. Procédé de préparation de copolymères styrène-acrylonitrile, caractérisé en ce que l'on polymérise du styrène et de l'acrylonitrile dans du dioxyde de carbone supercritique, éventuellement en présence d'un amorceur radicalaire, à une pression de 73 à 400 bar et à une température de 31 à 200°C.

2. Procédé selon la revendication 1, caractérisé en ce que l'on utilise 5 à 1 500 parties en masse de dioxyde de carbone pour 100 parties en masse.

3. Procédé selon la revendication 1, caractérisé en ce que l'on polymérise le styrène et l'acrylonitrile dans le rapport massique 20-35:80-65 dans un tube réactionnel ayant un rapport 1/d supérieur à 10 à une pression de 100 à 300 bar, une température de 70 à 200°C et un temps de séjour de 1 à 10 h.

4. Procédé selon la revendication 1, dans lequel la polymérisation est réalisée de manière continue ou discontinue.

5. Procédé selon la revendication 1, dans lequel le styrène et l'acrylonitrile sont polymérisés dans un réacteur à grande viscosité.
